# EUROPEAN PATENT APPLICATION

(11) **EP 4 435 286 A1**
(43) Date of publication of application: **25.09.2024**
(21) Application number: 23204076.6
(22) Date of filing: 17.10.2023
(51) Int. Cl.: F16D 65/18, F16D 65/092, F16D 65/46

(54) **ADJUSTABLE PARALLELISM BRAKE DEVICE FOR BRAKE PADS**

(30) Priority: 22.03.2023 TW 112202584 U
(71) Applicant: Lanxi Jieke Sports Apparatus Manufacturg Co., Ltd., Lanxi City Zhejiang Province (CN)
(72) Inventor: Chen, Yao, LANXI City (CN); Wang, Yihuai, LANXI City (CN); Zheng, Chengguo, LANXI City (CN)
(74) Representative: Cabinet Chaillot

(57) **Abstract**

An adjustable parallelism brake device for brake pads includes a pivotal arm (1), a main body (2) connected to the pivotal arm (1), a driving disc (3), and an attached body (4) to which the main body (2) is connected. The pivotal arm (1) is connected between the main body (2) and the driving disc (3). The driving disc (3) includes a flat bearing (17) and a flat washer (5) mounted thereto to contact the main body (2). A directional drive disc (6) is located below the driving disc (3). Multiple adjustable screws (7) threadedly extend through the directional drive disc (6), and each have a head which supports a first friction pad (8). The attached body (4) includes multiple flat threaded columns (16), and each flat threaded column (16) supports a second friction pad (11). A pin (12) passes through the first and second friction pads (8, 11) and is secured to the attached body (4). The angle of the friction pads (8, 11) is adjusted by the adjustable screws (7) to prevent deformation due to prolonged use in the same position.

## Description

### FIELD OF THE INVENTION

The present invention relates to a brake device, and more particularly, to an adjustable parallelism brake device for brake pads.

### BACKGROUND OF THE INVENTION

Bicycles and electric power-assisted bicycles are increasingly becoming exercise tools for cycling enthusiasts. Braking devices are frequently used in their operation. Conventional mechanical disc brake devices often experience the issue of the brake pads pressing unevenly against the friction surface, causing deformation of the backing plate of the brake pad due to prolonged use. This results in reduced pressure, leading to a decrease in braking force and friction. The deformation of the brake pads becomes particularly noticeable after extended periods of use.

The present invention is to provide an adjustable parallelism brake device for brake pads. This is achieved through the use of adjustable screws and flat bolts to adjust the angles of the brake pads and the clamping angle between the two brake pads.

### SUMMARY OF THE INVENTION

The present invention relates to an adjustable parallelism brake device for brake pads, and comprises a pivotal arm, a main body connected to the pivotal arm, a driving disc, and an attached body. The main body is fixedly connected to the attached body by multiple connecting screws. The pivotal arm is connected between the main body and the driving disc. The pivotal arm is connected to a cable. The driving disc has a flat bearing and a flat washer mounted thereto. The driving disc contacts against the main body through the flat washer and the flat bearing. A directional drive disc is located below the driving disc. Multiple adjustable screws threadedly extend through threaded holes on both sides of the directional drive disc, and each adjustable screw has a head which supports a first friction pad by a first V-shaped spring. The attached body includes multiple flat threaded columns, and each flat threaded column includes a distal end which supports a second friction pad by a second V-shaped spring. The first friction pad and the second friction pad each have a hole defined in one side thereof. A pin passes through the hole of each of the first and second friction pads and is secured to the attached body.

Preferably, the directional drive disc includes at least two holes to which the adjustable screws are connected.

Preferably, each of the adjustable screws has a compression spring mounted thereto which is located corresponding to a hole in the main body. A washer and a locking ring are respectively mounted to each of the adjustable screws. The compression spring on each adjustable screw contacts the washer corresponding thereto. The adjustable screws extend into the main body and each include a hexagonal recess defined in the head thereof.

Preferably, each of the driving disc and the directional drive disc has multiple grooves defined in a facing end surface thereof. Each groove is an arc-teardrop shaped groove with varying depths. The grooves of the driving disc and the directional drive disc are in pairs. A ball is movably accommodated in each pair of the grooves of the driving disc and the directional drive disc.

Preferably, the flat threaded columns are threadedly connected to the inside the attached body, and the distal end of each of the flat threaded columns supports the second friction pad by the V-shaped spring.

Preferably, the first V-shaped spring provides an expansive force to bias the head of the adjustable screws to contact the first pad. The second V-shaped spring provides another expansive force to bias the distal ends of the flat threaded columns to contact the second friction pad.

Preferably, the pins are open-ended pins which are inserted into holes in both first friction pad and the second friction pad.

Preferably, the main body has a guide member for passage of the cable.

The present invention includes the following advantages.

First, by pivoting the pivotal arm on the main body to rotate the driving disc, the movement of the balls is driven by the rotation of the driving disc, causing the directional drive disc to move downward. This triggers braking of the corresponding friction pad. This braking method offers strong braking effectiveness.

Second, the two adjustable screws on the main body can be adjusted by using a wrench to modify their positions. This facilitates the adjustment of the distance between the friction pads and allows to adjust the gaps between two ends of the friction pads and the brake disc. This ensures the friction pads and brake disc are perfectly parallel.

Third, the two flat threaded columns on the attached body can also be adjusted to change the gaps between the two ends of the corresponding friction pads and the brake disc. This ensures that the friction pads and brake disc remain consistently parallel. This increases the contact surface during braking, reduces the gap between the friction pads and the brake disc, thereby obtaining stronger braking effectiveness and improved braking feel. Additionally, it prevents deformation of the friction pads due to prolonged pressure on their center.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the adjustable parallelism brake device of the present invention;
Fig. 2 is a cross sectional view of the adjustable parallelism brake device of the present invention;
Fig. 3 shows the main body of the adjustable parallelism brake device of the present invention and the position where a wrench is to be inserted;
Fig. 4 shows that the directional drive disc has multiple arc-teardrop shaped grooves and each groove includes a ball therein;
Fig. 5 is a rear side view of the main body of the adjustable parallelism brake device of the present invention, and
Fig. 6 shows that the friction pad is deformed due to prolonged pressure.

### DETAILED DESCRIPTION OF THE PREFERRED EMBODIMENT

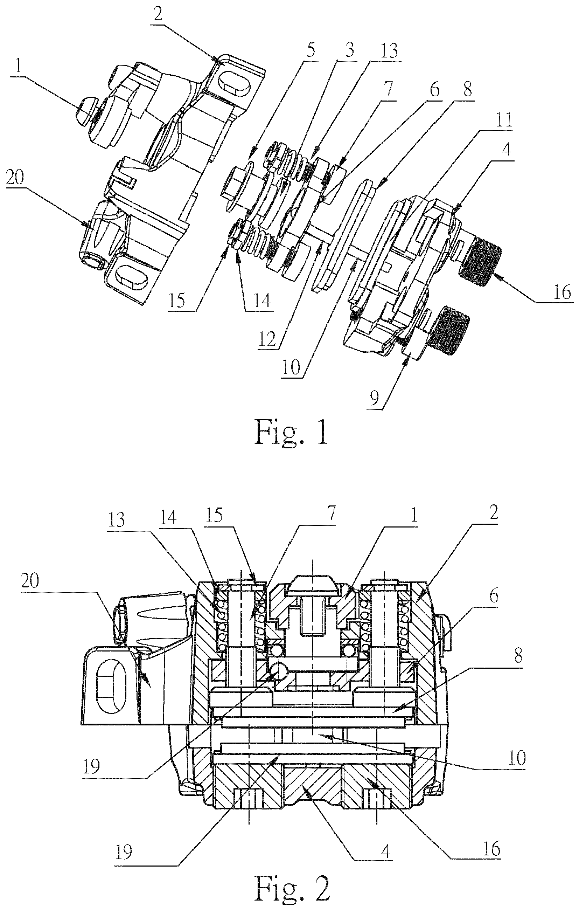

Referring to Figs. 1 to 5, the adjustable parallelism brake device for brake pads of the present invention comprises a pivotal arm 1, a main body 2 connected to the pivotal arm 1, a driving disc 3, and an attached body 4. The main body 2 is fixedly connected to the attached body 4 through multiple connecting screws 9. The pivotal arm 1 has one of two ends thereof connected to the main body 2 via screws and a cable is connected to the pivotal arm 1. Another one of the two ends of the pivotal arm 1 is fixedly connected to the driving disc 3 via screws. The driving disc 3 has a flat bearing 17 and a flat washer 5 mounted thereto. The driving disc 3 contacts against the main body 2 through the flat washer 5 and the flat bearing 17. A directional drive disc 6 is located below the driving disc 3. Multiple adjustable screws 7 threadedly extend through threaded holes on both sides of the directional drive disc 6, and each adjustable screw 7 has a head which supports a first friction pad 8 by a first V-shaped spring 10. The attached body 4 includes multiple flat threaded columns 16, and the distal end of each flat threaded column 16 supports a second friction pad 11 by a second V-shaped spring 100. The first friction pad 8 and the second friction pad 11 each have a hole defined in one side thereof, and a pin 12 passes through the hole of each of the first and second friction pads 8, 11, and is secured to the attached body 4. In this embodiment, the pins 12 are open-ended pins.

The cable that is connected to the pivotal arm 1 is then connected to the brake lever (not shown). When pulling the brake lever, the cable pivots the pivotal lever 1 which rotates the driving disc 3. Each of the driving disc 3 and the directional drive disc 6 has multiple grooves 18 defined in their facing end surface. The grooves 18 of the driving disc 3 and the directional drive disc 6 are in pairs. A ball 19 is movably accommodated in each pair of the grooves 18 of the driving disc 3 and the directional drive disc 6. The directional drive disc 6 has threaded holes throughout which the adjustable screws 7 threadedly extend. Therefore, the rotation of the directional drive disc 6 causes the balls 9 to move in the grooves 18. Each groove 18 is an arc-teardrop shaped groove with varying depths, so that when the balls 19 moves from the deep area to the shallow area of the grooves 18, the gap between the driving disc 3 and the directional drive disc 6 is increased. The directional drive disc 6 and the adjustable screws 7 then move downward. Because each adjustable screw 7 has the first V-shaped spring 10 to support the first friction pad 8, so that the first friction pad 8 performs a braking action. Similarly, because each flat threaded column 16 has the second V-shaped spring 100 to support the second friction pad 11, so that the flat threaded columns 16 adjust the position of the second friction pad 11, and the adjustable screws 7 adjust the position of the first friction pad 8. The distance between the first and second friction pads 8, 11 can be adjusted according to practical needs such as the braking distance and force. After the brake lever is released, the directional drive disc 6 and the driving disc 3 return to their initial positions, and the first and second V-shaped springs 10, 100 push the first and second friction pads 8, 11 back to their initial positions.

Preferably, the directional drive disc 6 includes at least two holes to which the adjustable screws 7 are threadedly connected to ensure the movement stability of the directional drive disc 6.

Preferably, each of the adjustable screws 7 has a compression spring 13 mounted thereto which is located corresponding to a hole in the main body 2. A washer 14 and a locking ring 15 are respectively mounted to each of the adjustable screws 7. The compression spring 13 on each adjustable screw 7 contacts the washer 14 corresponding thereto. The adjustable screws 7 extend into the main body 2, and each adjustable screw 7 includes a hexagonal recess defined in the head thereof.

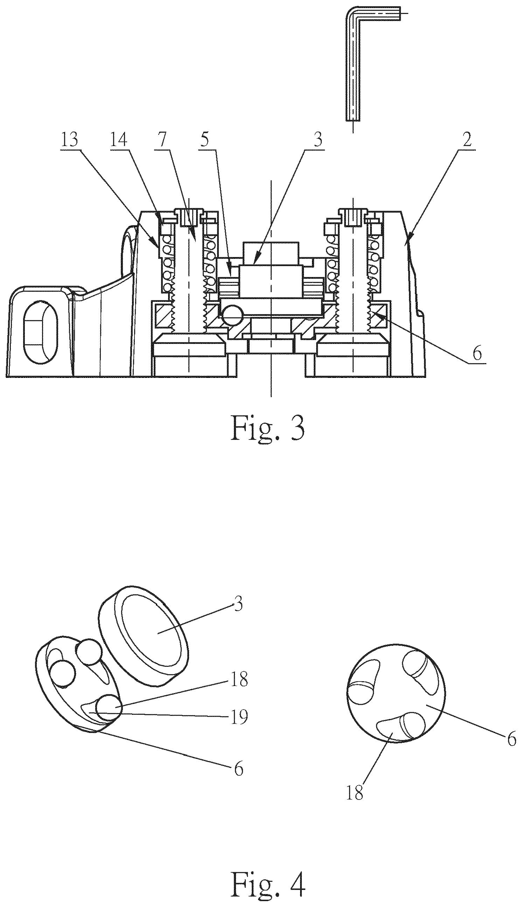

As shown in Figure 3, the top of the compression spring 13 is in contact with the washer 14. When pressed, pressure is applied to the compression spring 13, and releasing the lever 1 causes the compression spring 13 to restore the adjustable screw 7 to its initial position. The head of the adjustable screw 7 is designed with the hexagonal slot mentioned above, allowing for adjustment BY using a hex wrench to modify the height position of the adjustable screw 7 during adjustments.

The flat threaded columns 16 are threadedly connected to the inside of the attached body 4, and the distal end of each of the flat threaded columns 16 supports the second friction pad 11 by the second V-shaped spring 100.

As shown in Fig. 1, the flat threaded column 16 is threaded inside the attached body 4. The end of the flat threaded column 16 has a magnet to mount the second friction pad 11. The flat threaded column 16 can be rotated by using a wrench to adjust its position, allowing for the adjustment of the position of the second friction pad 11. This enables the adjustment of the gap and parallelism between the first friction pad 8 and the second friction pad 11. This adjustment can be made based on the force applied to the brake lever or the tension of the cable when manually operated.

Preferably, the first V-shaped spring 10 provides an expansive force to bias the head of the adjustable screws 7 to contact the first pad 8. The second V-shaped spring 100 provides another expansive force to bias the distal ends of the flat threaded columns 16 to contact the second friction pad 11.

Preferably, the pins 12 are open-ended pins which are inserted into holes in both first friction pad 8 and the second friction pad 11.

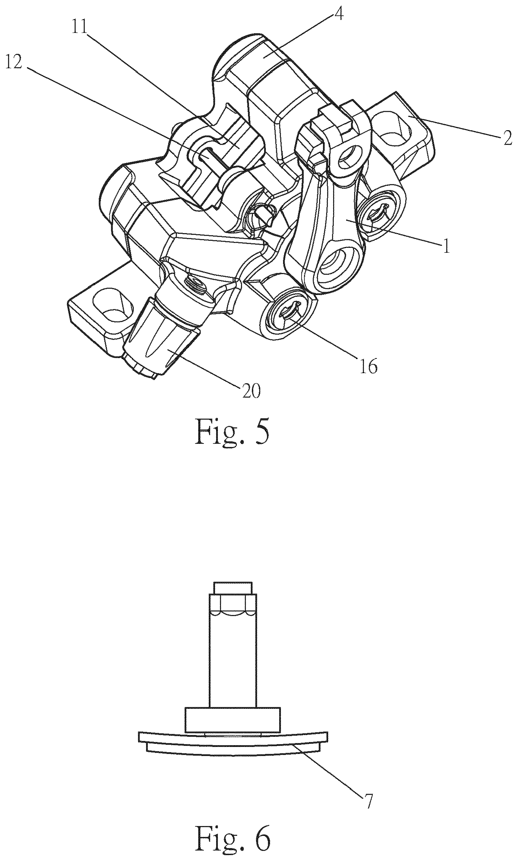

As shown in Fig. 5, the first friction pad 8 and the second friction pad 11 move along the pin 12. The pin 12 is connected to the attached body 4, serving for the installation and positioning of the first friction pad 8 and the second friction pad 11. The main body 2 and the attached body 4 are securely connected through connecting screws 9 to ensure the stability and integrity of the entire brake device.

Preferably, the main body 2 has a guide member 20 so that the cable passes through the guide member 20 and is connected to the pivotal arm 1.

While we have shown and described the embodiment in accordance with the present invention, it should be clear to those skilled in the art that further embodiments may be made without departing from the scope of the present invention.

## Claims

1. An adjustable parallelism brake device for brake pads, comprising:
a pivotal arm, a main body connected to the pivotal arm, a driving disc, and an attached body, the main body fixedly connected to the attached body through connecting screws, the pivotal arm having one of two ends thereof connected to the main body via screws and adapted to be connected to a cable, another one of the two ends of the pivotal arm fixedly connected to the driving disc via screws, the driving disc having a flat bearing and a flat washer mounted thereto, the driving disc contacting against the main body through the flat washer and the flat bearing, a directional drive disc located below the driving disc, multiple adjustable screws threadedly extending through threaded holes on both sides of the directional drive disc, each adjustable screw has a head which supports a first friction pad by a first V-shaped spring, the attached body including multiple flat threaded columns, each flat threaded column includes a distal end which supports a second friction pad by a second V-shaped spring, the first friction pad and the second friction pad each having a hole defined in one side thereof, a pin passing through the hole of each of the first and second friction pads and being secured to the attached body.

2. The adjustable parallelism brake device for brake pads as claimed in claim 1, wherein the directional drive disc includes at least two holes to which the adjustable screws are connected.

3. The adjustable parallelism brake device for brake pads as claimed in claim 1, wherein each of the adjustable screws has a compression spring mounted thereto which is located corresponding to a hole in the main body, a washer and a locking ring are respectively mounted to each of the adjustable screws, the compression spring on each adjustable screw contacts the washer corresponding thereto, the adjustable screws extend into the main body, each adjustable screw includes a hexagonal recess defined in the head thereof.

4. The adjustable parallelism brake device for brake pads as claimed in claim 1, wherein each of the driving disc and the directional drive disc has multiple grooves defined in a facing end surface thereof, each groove is an arc-teardrop shaped groove with varying depths, the grooves of the driving disc and the directional drive disc are located in pairs, a ball is movably accommodated in each pair of the grooves of the driving disc and the directional drive disc.

5. The adjustable parallelism brake device for brake pads as claimed in claim 1, wherein the flat threaded columns are threadedly connected to an inside of the attached body, and the distal end of each of the flat threaded columns supports the second friction pad by the second V-shaped spring.

6. The adjustable parallelism brake device for brake pads as claimed in claim 1, wherein the first V-shaped spring provides an expansive force to bias the head of the adjustable screws to contact the first pad, the second V-shaped spring provides another expansive force to bias the distal ends of the flat threaded columns to contact the second friction pad.

7. The adjustable parallelism brake device for brake pads as claimed in claim 1, wherein the pins are open-ended pins which are inserted into holes in both first friction pad and the second friction pad.

8. The adjustable parallelism brake device for brake pads as claimed in claim 1, wherein the main body has a guide member for passage of the cable.
